# EUROPÄISCHE PATENTANMELDUNG

(11) **EP 1 216 821 A1**
(43) Veröffentlichungstag der Anmeldung: **26.06.2002**
(21) Anmeldenummer: 02003037.5
(22) Anmeldetag: 01.10.1999
(51) Int. Cl.: B32B 25/08, B29C 45/16, C08L 53/02, C08J 7/04

(54) **Verbundkörper aus Polyacetal und Styrol-Olefin-Elastomeren**

(30) Priorität: 02.10.1998 DE 19845235
(62) Teilanmeldung aus: 99952481.2
(71) Anmelder: Ticona GmbH, 65451 Kelsterbach (DE)
(72) Erfinder: Ziegler, Ursula, Dr., 55130 Mainz (DE); Kurz, Klaus, Dr., 65451 Kelsterbach (DE); Reil, Frank, 64342 Seeheim (DE); Schmidt, Fritz A., 84478 Waldkraiburg (DE); Herbst, Rudi, Norcross, GA 30071 (US)

(57) **Zusammenfassung**

Verbundkörper aus Polyacetal und mindestens einem modifizierten Styrol-Olefin-Elastomeren, welches 15 bis 70 Gew.-%, bezogen auf das Gewicht des modifizierten Styrol-Olefin-Etastomeren, nicht-olefinisches Thermoplastmaterial enthält, sowie ein Verfahren zu dessen Herstellung, wobei erst ein Formteil aus Polyacetal geformt wird, an das anschließend eine Beschichtung oder mindestens ein Formteil aus dem modifizierten Styrol-Olefin-Elastomeren angespritzt wird wobei das Polyacetal adhesiv mit dem modifizierten Styrol-Olefin-Elastomeren verbunden wird.

## Beschreibung

Die Erfindung betrifft einen Verbundkörper aus Polyacetal und Styrol-Olefin-Elastomeren sowie ein Verfahren zu seiner Herstellung. Durch Modifizierung des Styrol-Olefin-Elastomeren mit nicht-olefinischem Thermoplastmaterial wurde es möglich, einen adhesiven Verbund zwischen Polyacetal und Styrol-Olefin-Elastomeren zu erhalten.

Der technische Werkstoff Polyacetal, d.h. Polyoxymethylen (POM), hat ausgezeichnete mechanische Eigenschaften und ist darüber hinaus im allgemeinen auch widerstandsfähig gegen alle üblichen Lösemittel und Kraftstoffe. Aufgrund der guten Festigkeit und Härte verbunden mit einer ausgezeichneten Rückstellelastizität finden Formteile aus Polyacetal in allen Bereichen des täglichen Lebens sehr häufig Anwendung für Schnappverbindungen, insbesondere Clips. Die ausgezeichneten Gleit-Reib-Eigenschaften begründen den Einsatz von POM für viele bewegliche Teile wie Getriebeteile, Umlenkrollen, Zahnräder oder Verstellhebel. Formteile aus POM werden auch sehr häufig im Automobilbau eingesetzt. Aufgrund der sehr guten mechanischen Beständigkeit und Resistenz gegen Chemikalien werden auch vielfältige Gehäuse und Tastaturen aus POM hergestellt.

POM weist jedoch bei Raumtemperatur einen niedrigen mechanischen Dämpfungsfaktor auf, was in einigen Anwendungsfällen den Einsatz von weichen Dämpfungselementen erforderlich macht. Beim Einbau von Formteilen aus POM ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bedienungssicherheit beispielsweise von Schaltelementen und Bedienungselementen aus POM, einschränken.
Es werden andererseits auch immer öfter Kombinationen aus harten und weichen Werkstoffen eingesetzt, um die besonderen Eigenschaften dieser Werkstoffe miteinander zu kombinieren. Der harte Werkstoff soll dabei die Festigkeit der Bauteile bewirken, der weiche Werkstoff übernimmt aufgrund seiner elastischen Eigenschaften Funktionen zur Dichtung oder Vibrations- und Geräuschdämpfung oder bewirkt eine Veränderung der Oberflächenhaptik.
Wichtig bei diesen Anwendungen ist eine ausreichende Haftung zwischen der harten und der weichen Komponente.

Bislang werden entweder Dichtungen und Dämpfungselemente separat bereitgestellt und üblicherweise in einem zusätzlichen Arbeitsschritt mechanisch verankert oder verklebt, was zusätzliche Arbeit und teilweise erhebliche Zusatzkosten verursacht. Eine neuere und wirtschaftlichere Methode ist der Mehrkomponentenspritzguß. Hierbei wird z.B. eine zweite Komponente auf eine vorgeformte erste Komponente aufgespritzt. Die erreichbare Haftung zwischen den beiden Komponenten ist für dieses Verfahren von großer Bedeutung. Im Mehrkomponentenspritzguß kann diese Haftung zwar in formschlüssigen Verbindungen durch Anbringung von Hinterschnitten oft noch verbessert werden.
Jedoch ist eine gute Grundhaftung durch chemische Affinität zwischen den ausgewählten Komponenten oft Voraussetzung für deren Einsatz.

Allgemein bekannt sind z.B. nach dem Mehrkomponentenspritzguß hergestellte Kombinationen aus Polypropylen und Polyolefinelastomeren oder Styrol-Olefin-Elastomeren, Polybutylenterephthalat mit Polyesterelastomeren oder Styrol-Olefin-Elastomeren. Auch Polyamide zeigen Haftung zu sehr vielen Weichkomponenten.

Bekannt sind auch Formteile aus Polyacetal mit direkt angeformten Funktionselementen, die unter Verwendung nicht vernetzter Kautschuke hergestellt wurden (DE-C 44 39 766). Die Haftfestigkeit derartiger Verbundkörper ist jedoch noch nicht zufriedenstellend.

Eine weitere Veröffentlichung betrifft ebensolche Verbundkörper, die aus u.a. einem Polyacetal, einem Kautschuk-Copolymerisat, einem verstärkenden Füllstoff, einem Vernetzer und gegebenenfalls weiteren üblichen Zuschlagstoffen bestehen (DE-A 9611272). Eine besonders gute Haftung der Polymerkomponenten wird durch die Vulkanisation des Kautschukanteils erreicht. Allerdings wird dieser zusätzliche Schritt wegen der erhöhten Vulkanisations-Temperaturen und -Zeiten nachteilig bewertet.

Eine weitere Anmeldung (noch nicht offengelegte deutsche Patentanmeldung Nr. 197 43 134.8) betrifft ein Verfahren zur Herstellung von Verbundkörpern aus Polyacetal und einer weichen Komponente, dergestalt daß das Polyacetal in einem ersten Schritt in einem Formwerkzeug vorgespritzt wird und in einem zweiten Schritt das Material mit der geringeren Härte aufgespritzt wird und dabei haftend mit dem Polyacetal verbunden wird. Dabei wird für den Bereich geringerer Härte ein thermoplastisches Polyurethan-Elastomer (TPE-U) mit einer Härte von Shore A 65 bis Shore D 75 eingesetzt. Dieser Härtebereich ist jedoch für viele Anwendungen zu hoch. Zudem weisen die beschriebenen thermoplastischen Polyurethan-Elastomere die bekannten Nachteile in der Verarbeitung, wie z.B. Feuchtigkeitsaufnahme, dadurch bedingte thermische Instabilität und Fließfähigkeitsschwankungen sowie Entformungsprobleme auf.

In verschiedenen Veröffentlichungen werden thermoplastische Polystyrol-Elastomere (TPE-S), insbesondere Styrol-Olefin-Blockcopolymere als Weichkomponente für den Mehrkomponentenspritzguß beschrieben. Verbindungen mit Polyacetalen werden jedoch nicht erwähnt (z.B. Kunststoffe 88 (1998), S. 207-208; Modern Plastics International, Mai 1998, S. 56-61).
Verschiedene thermoplastische Elastomere sollen mit Thermoplasten im Overmouldingverfahren kombinierbar sein, wobei z.B. Polyurethan-Elastomere (TPE-U) eine Haftung an POM aufweisen sollen (Kunststoffe 84 (1994), S. 709; Kunststoffe 86 (1996), S. 319). In diesen Veröffentlichungen wird allerdings ausdrücklich darauf hin gewiesen, daß es zwischen POM und TPE-S (Styrolelastomeren) keine Haftung gibt.

Schließlich werden auch im Mehrkomponentenspritzguß hergestellte Formteile aus thermoplastischen Kunststoffen und einer geräuschdämpfenden Ummantelung aus thermoplastischen Elastomeren beschrieben (DE 4434656-C1). Bei diesen Formteilen wird der Verbund jedoch mechanisch durch Verhakungen hergestellt. Ebenso wie für die thermoplastischen Elastomere sind auch für die einsetzbaren thermoplastischen Kunststoffe eine Vielzahl von Stoffen angeführt, u.a. auch Styrol-Olefin-Elastomere und POM. Spezielle Hinweise, gerade diese Stoffe gemeinsam einzusetzen, sowie Vorteile einer solchen Kombination fehlen in der Veröffentlichung.

Aufgabe der vorliegenden Erfindung war es, einen Verbundkörper aus Polyacetal und thermoplastischen Elastomeren zu schaffen, bei dem die genannten Nachteile und Einschränkungen nicht vorhanden sind.

Überraschend wurde gefunden, daß Styrol-Olefin-Elastomere, die durch Zugabe von nicht-olefinischem Thermoplastmaterial modifiziert wurden, einen adhesiven Verbund mit Polyacetal eingehen. Mit olefinischem Thermoplastmaterial modifizierte Styrol-Olefin-Elastomere zeigen dagegen keine dauerhafte Haftung an Polyacetal.

Die Erfindung betrifft daher einen Verbundkörper aus Polyacetal und mindestens einem modifizierten Styrol-Olefin-Elastomeren, welches 15 bis 70 Gew.-%, bezogen auf das Gewicht des modifizierten Styrol-Olefin-Elastomeren, nicht-olefinisches Thermoplastmaterial enthält, sowie ein Verfahren zu dessen Herstellung, wobei erst ein Formteil aus Polyacetal geformt wird, an das anschließend eine Beschichtung oder mindestens ein Formteil aus dem modifizierten Styrol-Olefin-Elastomeren angespritzt wird wobei das Polyacetal adhesiv mit dem modifizierten Styrol-Olefin-Elastomeren verbunden wird.

Der erfindungsgemäße Verbundkörper wird dabei durch ein Polyacetal-Formteil gebildet, das teilweise oder vollständig mit dem modifizierten Styrol-Olefin-Elastomeren beschichtet wurde oder an das ein oder mehrere Formteile, auch Funktionsteile genannt, aus dem modifizierten Styrol-Olefin-Elastomeren direkt angeformt wurden. Es kann sich dabei beispielsweise um ein flächiges Polyacetal-Formteil handeln, das auf einer Seite eine Schicht aus Styrol-Olefin-Elastomeren trägt. Beispiele hierfür sind rutschfeste Unterlagen, Griffmulden, Bedien- und Schaltelemente, mit Dichtungen oder Dämpfungselementen versehene Funktionsteile sowie Innen- und Außenverkleidungen von Zweirädern, Kraft-, Luft-, Schienen- und Wasserfahrzeugen, die durch das Polyacetal die erforderliche Formstabilität und durch die Elastomeren-Schicht die gewünschte Reibungseigenschaft, Dichtfunktion, Haptik oder Optik erhalten.

Der Verbundkörper kann aber auch aus einem oder mehreren Polyacetal-Formteilen beliebiger Gestalt bestehen, woran ein oder mehrere Formteile beliebiger Gestalt aus dem modifizierten Styrol-Olefin-Elastomeren direkt angeformt wurden. Der Ausdruck "direkt angeformt" soll im Rahmen der vorliegenden Erfindung so verstanden werden, daß die Funktionselemente direkt auf das Formteil aus Polyacetal, mit dem sie einen haftfesten Verbund eingehen sollen, aufgespritzt werden, insbesondere in einem Mehrkomponentenspritzgußverfahren.

Durch die Verwendung der mit nicht-olefinischem Thermoplastmaterial modifizierten Styrol-Olefin-Elastomeren können beispielsweise Dicht- oder Dämpfungselemente aus dem Elastomeren direkt an Formteile aus Polyacetal angeformt werden, ohne daß weitere Montageschritte erforderlich werden. Durch den Wegfall der bisher benötigten Verarbeitungsschritte zur Montage von Funktionselementen ist eine erhebliche Kosteneinsparung bei der Produktion der erfindungsgemäßen Verbundkörper zu erzielen.

Die Herstellung des Verbundkörpers erfolgt nach den allgemein bekannten Methoden und Verfahren. Wirtschaftlich und vorteilhaft ist die Verwendung des Mehrkomponentenspritzgußverfahrens, wobei zunächst das Polyacetal im Spritzgußwerkzeug geformt, d.h. vorgespritzt wird und anschließend eine Beschichtung oder ein Formteil aus dem modifizierten Styrol-Olefin-Elastomeren auf das Polyacetal-Formteil gespritzt wird.

Bei der Fertigung des Polyacetal-Formteils liegt die Massetemperatur dabei im üblichen Bereich, d.h. für die unten beschriebenen Polyacetale im Bereich von etwa 180 bis 240°C, vorzugsweise bei 190 bis 230°C. Das Werkzeug selbst wird auf eine Temperatur im Bereich von 20 bis 140°C temperiert. Für die Form-Präzision und Dimensionsstabilität des harten Bauteilkörpers aus dem teilkristallinen Werkstoff Polyacetal ist eine Werkzeugtemperatur im oberen Temperaturbereich vorteilhaft.

Sobald die Kavität im Werkzeug vollständig gefüllt und der Nachdruck nicht weiter wirksam ist (Siegelpunkt), kann das Polyacetal-Formteil fertig ausgekühlt und als erster Teil des Verbundkörpers (Vorspritzling) entformt werden. In einem zweiten, nachgeschalteten separaten Spritzgießschritt wird dann z.B. dieser Vorspritzling in ein anderes Werkzeug mit einer ausgesparten Kavität eingelegt bzw. umgesetzt und das Material mit der geringeren Härte, d.h. das modifizierte Styrol-Olefin-Elastomer, in das Werkzeug eingespritzt und dabei auf das Polyacetal-Formteil aufgespritzt. Dieses Verfahren ist als Einlege- oder Umsetzverfahren bekannt. Für die nachfolgend erreichbare Haftung ist es besonders vorteilhaft, wenn das vorgespritzte Polyacetal-Formteil auf eine Temperatur im Bereich von 80°C bis knapp unter den Schmelzpunkt vorgewärmt wird. Damit wird ein Anschmelzen der Oberfläche durch das aufgespritzte Styrol-Olefin-Elastomer und dessen Eindringen in die Grenzschicht erleichtert.

Das vorgespritzte Polyacetal-Formteil kann aber auch nur teilentformt werden und zusammen mit einem Teil des ursprünglichen Werkzeugs (z.B. der Angußplatte, der Ausstoßerseite oder nur einer Indexplatte) in eine weitere größere Kavität bewegt werden.

Eine andere Möglichkeit besteht darin, das modifizierte Styrol-Olefin-Elastomer ohne Zwischenöffnen der Maschine und Weitertransport des Vorspritzlings aus Polyacetal in das gleiche Werkzeug einzuspritzen. Dabei sind die für die Elastomer-Komponente vorgesehenen Werkzeughohlräume beim Einspritzen der Polyacetal-Komponente zunächst durch verschiebbare Einsätze oder Kerne verschlossen und werden erst zum Einspritzen der Elastomer-Komponente geöffnet (Schiebertechnik). Diese Verfahrensvariante ist auch zum Erzielen einer guten Haftung besonders vorteilhaft, da bereits nach kurzer Kühlzeit die Schmelze des Styrol-Olefin-Elastomeren auf einen noch heißen Vorspritzling trifft.

Gegebenenfalls können im Mehrkomponentenspritzgußverfahren weitere Formteile aus Polyacetal und dem modifizierten Styrol-Olefin-Elastomeren gleichzeitig oder in aufeinander folgenden Schritten aufgespritzt werden.

Beim Aufspritzen des modifizierten Styrol-Olefin-Elastomeren ist es für eine gute Haftung vorteilhaft, die Einstellungen für die Massetemperatur sowie den Einspritzund den Nachdruck möglichst hoch zu wählen. Im allgemeinen liegt die Massetemperatur des Styrol-Olefin-Elastomeren im Bereich von 200 bis 270°C und wird nach oben durch ihre Zersetzung begrenzt. Die Werte für die Einspritzgeschwindigkeit sowie für den Einspritz- und Nachdruck sind maschinenund formteilabhängig und sind den jeweiligen Gegebenheiten anzupassen.

Nach allen Verfahrensvarianten, mit oder ohne Entformung des Vorspritzlings wird das Werkzeug im zweiten Schritt auf eine Temperatur im Bereich von 20°C bis 140°C temperiert. Je nach Konstruktion der Teile kann es sinnvoll sein, die Werkzeugtemperatur etwas abzusenken, um somit die Entformbarkeit und die Zykluszeiten zu optimieren. Nach dem Auskühlen der Teile wird der Verbundkörper entformt. Hierbei ist es bei der Werkzeugkonstruktion wichtig, die Auswerfer an geeigneter Stelle anzubringen, um eine Belastung der Werkstoff-Verbundnaht zu minimieren. Auch eine ausreichende Entlüftung der Kavität im Nahtbereich ist bei der Werkzeugkonstruktion vorzusehen, um eine Behinderung der Verbindung zwischen den beiden Komponenten durch eingeschlossene Luft möglichst gering zu halten. Einen ähnlichen Einfluß übt auch die Art der Werkzeugwandrauhigkeit aus. Für die Ausbildung einer guten Haftung ist eine glatte Oberfläche an der Stelle der Verbundnaht vorteilhaft, da dann weniger Luft in der Oberfläche eingeschlossen wird.

Die Verbundfestigkeit bei Zugbelastung zwischen dem Polyacetal-Formteil und dem modifizierten Styrol-Olefin-Elastomeren, die durch das Verfahren gemäß der Erfindung erzielt wird, beträgt mindestens 0,5 N/mm². Für Funktionsteile ist eine höhere Haftung - je nach Beanspruchung - anzustreben.

Das erfindungsgemäß eingesetzte Polyacetal ist aus der Gruppe der bekannten Polyoxymethylene (POM), wie sie beispielsweise in der DE-A 29 47 490 beschrieben sind. Es handelt sich hierbei im allgemeinen um unverzweigte lineare Polymere, die in der Regel mindestens 80 Mol-%, vorzugsweise mindestens 90 Mol-%, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise, z.B. durch Veresterung oder Veretherung, chemisch gegen Abbau stabilisiert sind.

Copolymere sind Polymere aus Formaldehyd oder seinen cyclischen Oligomeren, insbesondere Trioxan, und cyclischen Ethern, cyclischen Acetalen und/oder linearen Polyacetalen.

Als Comonomere kommen einerseits cyclische Ether mit 3, 4 oder 5, vorzugsweise jedoch 3 Ringgliedern, andererseits von Trioxan verschiedene cyclische Acetale mit 5 bis 11, vorzugsweise 5, 6, 7 oder 8 Ringgliedern sowie lineare Polyacetale in Frage, jeweils in Mengen von 0,1 bis 20 Mol-%, vorzugsweise 0,5 bis 10 Mol-%.

Die eingesetzten Polyacetal-Polymere haben im allgemeinen einen Schmelzindex (MFR-Wert 190/2,16) von 0,5 bis 75 g/10 min (ISO 1133).

Es können auch modifizierte POM-Typen eingesetzt werden. Zu diesen modifizierten Typen zählen beispielsweise Blends aus POM mit TPE-U (Thermoplastisches Polyurethan-Elastomer), mit MBS (Methylmethacrylat/Butadien/Styrol-core-shell-Elastomer), mit Methylmethacrylat/Acrylat-core-shell-Elastomer, mit PC (Polycarbonat), mit SAN (Styrol/AcryInitril-Copolymer) oder mit ASA (Acrylat/Styrol/AcryInitril Copolymer-Compound).

Bei den erfindungsgemäß eingesetzten modifizierten Styrol-Olefin-Elastomeren handelt es sich um Compounds, auf der Grundlage von thermoplastischen Styrol-Olefin-Elastomeren (TPE-S). Im allgemeinen enthalten diese Compounds 20 bis 85 Gew.-%, vorzugsweise 35 bis 70 Gew.-% mit Maleinsäureanhydrid funktionalisierte und/oder nicht funktionalisierte hochmolekulare Triblockcopolymere, die aus steifen Styrol-Endblöcken und flexiblen Olefin-Mittelblöcken aufgebaut sind, und 15 bis 70 Gew.-%, vorzugsweise 20 bis 50 Gew.-% nicht-olefinisches Thermoplastmaterial. Bezogen auf den Styrol-Olefin-Blockcopolymeranteil enthält das Compound zudem mindestens jeweils 5 und maximal jeweils 200 Gewichtsteile Weichmacheröl bzw. anorganischen Füllstoff pro 100 Gewichtsteile Styrol-Olefin-Blockcopolymer.

Die erfindungsgemäß zu verwendenden Styrol-Olefin-Blockcopolymere werden beispielsweise in EP-A-710703 und EP-A-699519 beschrieben, worauf Bezug genommen wird. Vorzugsweise enthalten die Styrol-Olefin-Blockcopolymere etwa 30 mol-% Styrol und 70 mol-% Olefin, wobei der Olefin-Mittelblock vorzugsweise aus Ethylen- und Butyleneinheiten aufgebaut ist.

Durch Variation der Anteile an funktionalisierten bzw. nicht-funktionalisierten Styrol-Olefin-Triblockcopolymeren, nicht-olefinischem Thermoplastmaterial, Weichmacher und anorganischem Füllstoff ist es möglich, modifizierte Styrol-Olefin-Elastomere mit unterschiedlichen Eigenschaften herzustellen. Das Elastomer-Compound kann zusätzlich auch übliche Stabilisatoren und Verarbeitungshilfen enthalten.

Die erfindungsgemäßen TPE-S Compounds haben eine Härte im Bereich von 30 bis 90 Shore A, vorzugsweise 40 bis 80 Shore A. Diese Härte kann durch die Anteile der Weichmacher und der thermoplastischen Komponente eingestellt werden. Als Weichmacher können paraffinische Mineralöle, synthetische Öle, halbsynthetische Öle, Esterweichmacher usw. verwendet werden.

Im allgemeinen ist es möglich, für den Thermoplastanteil im Styrol-Olefin-Elastomeren olefinische Thermoplaste wie Polyethylen, Polypropylen und Polyolefinelastomere, wahlweise auch talkumverstärkt oder mit Glasfaser gefüllt, zu verwenden. Wie aber die Versuche mit einem solchen Styrol-Olefin-Elastomeren, das mit olefinischem Thermoplastmaterial modifiziert ist, zeigen (siehe Vergleichsversuch B1), weisen derartige Styrol-Olefin-Elastomer-Compounds keine Haftung an Polyacetal auf.

Erfindungsgemäß wird daher das Styrol-Olefin-Elastomer durch Compoundierung mit nicht-olefinischem Thermoplastmaterial modifiziert, wobei das nicht-olefinische Thermoplastmaterial thermoplastische Polymere wie thermoplastische Polyesterurethan-Elastomere, thermoplastische Polyetherurethan-Elastomere, thermoplastische Polyester, beispielsweise Polyethylenterephthalat und Polybutylenterephthalat, thermoplastische Polyesteresterelastomere, thermoplastische Poyetherester-Elastomere, thermoplastische Polyetheramid-Elastomere, thermoplastische Polyamide, thermoplastische Polycarbonate, thermoplastische Polyacrylate, Acrylat-Kautschuke oder StyrolacryInitril/Acrylat-Kautschuke (ASA), wahlweise auch glasfaser- oder glaskugelgefüllt, umfaßt. Die somit erhaltenen modifizierten Styrol-Olefin-Elastomere weisen eine Härte im Bereich von etwa Shore A 30 bis etwa Shore A 90, vorzugsweise von etwa Shore A 40 bis etwa Shore A 80 auf.

Im allgemeinen kann sowohl das Polyacetal als auch das modifizierte Styrol-Olefin-Elastomer-Compound übliche Zusatzstoffe wie Stabilisatoren, Nukleierungsmittel, Entformungsmittel, Gleitmittel, Füll- und Verstärkungsstoffe, Pigmente, Ruß, Lichtund Flammschutzmittel, Antistatika, Weichmacher oder optische Aufheller enthalten. Die Zusatzstoffe liegen in allgemein üblichen Mengen vor.

Neben den eingangs erwähnten Anwendungsgebieten finden die Verbundkörper gemäß der Erfindung Verwendung als Verbindungselemente in Form von Fittings, Kupplungen, Rollen, Lagern, als Funktionsteile mit integrierten Dicht- und/oder Dämpfungseigenschaften sowie als rutschfeste und griffreundliche Elemente. Hierzu zählen auch Gehäuse im Automobilbau wie Türschloßgehäuse, Fensterhebergehäuse, Schiebedachdichtelemente und ähnliche, ferner Befestigungselemente mit integrierter Abdichtung wie Clipse mit Dichtringen oder - scheiben, Zierleisten mit integrierter Dichtlippe, Abdichtungselemente zum Ausgleich von Dehnungsfugen, Befestigungselemente mit guten Dämpfungseigenschaften, z.B. Clipse mit schwingungs- und geräuschdämpfenden Kernen, Getriebeteile wie Zahnräder mit Dämpfungselementen, Zahnradgetriebe mit integrierten flexiblen Kupplungen, rutschfeste und griffreundliche Elemente wie Schalthebel oder -knöpfe oder Griffiächen an Elektrogeräten oder Schreibstiften sowie Kettenglieder mit elastischer Oberfläche.

Da ein Meßverfahren für die Haftfestigkeit zwischen der harten Polyacetal-Komponente und der weichen, thermoplastisch verarbeitbaren TPE-S-Komponente des erfindungsgemäßen Verbundkörpers nicht bestand, wurden geeignete Meßverfahren unter Technikumsverhältnissen entwickelt. Diese Verfahren sollen Hinweise auf mögliche, unter Praxisbedingungen erzielbare Ergebnisse liefern.

### Meßverfahren

Für die Spritzgießversuche wurde eine Dreikomponenten-Spritzgußmaschine mit einer Schließkraft von 2000 kN verwendet (Typ FM 175/200, Hersteller Klöckner-Ferromatik, Malterdingen, BRD). Von den vorhandenen drei Schnecken wurde ein Aggregat mit einem Durchmesser von 45 mm eingesetzt. In einer halbseitig verschlossenen Kavität wurden zunächst ISO-Zugstäbe mit nur einer Schulter aus Polyacetal vorgespritzt. Bei den dabei verwendeten Polyacetaltypen betrug die Massetemperatur 200°C, die Werkzeugtemperatur betrug 80°C.

Die so gewonnenen halben Zugstäbe aus Polyacetal wurden in einem Umluftofen bei verschiedenen Temperaturen T_{einleg} (20 bis 155°C) vorgewärmt und innerhalb von etwa 20 sec warm in die vollständig offene Zugstabform eingelegt. In einem zweiten Spritzgießvorgang wurde das modifizierte Styrol-Olefin-Elastomer bei verschiedenen Massetemperaturen Tₘ (200 bis 260 °C) und Werkzeugtemperaturen T_{w} (30 bis 80°C) mit einer Einspritzgeschwindigkeit vₑ von 50 bis 200 mm/sec in die Zugstabform gespritzt und somit die zweite Schulter des Zugstabs geformt. Der Nachdruck pₐ betrug 40 bis 80 bar bei einer Nachdruckzeit tₚₐ von 15 bis 30 sec.

Bei ausreichender Haftung entstand nach dem beschriebenen Verfahren ein vollständiger Zugstab mit einer Verbundnaht zwischen den beiden Schulterhälften aus Polyacetal und dem modifizierten Styrol-Olefin-Elastomer-Compound. Diese Prüfstäbe wurden auf einer Zugprüfmaschine Typ 1455 (Fa. Zwick, Ulm, BRD) im Zugversuch (ISO 527) mit einer Zuggeschwindigkeit von 50 mm/min geprüft. Für jedes Beispiel wurden 10 Verbund-Zugstäbe gespritzt und geprüft. Aus dem Ergebnis des Zugversuches (Spannung bei Dehnung) wurde die Zugfestigkeit bis zum Bruch der Stäbe an der Verbundnaht (Verbundfestigkeit) und die dazugehörige Bruchdehnung bestimmt. Die für die 10 Prüfkörper erhaltenen Werte wurden gemittelt und die dazugehörige Standardabweichung berechnet. Die Ergebnisse sind in den Tabellen 1 und 2 aufgeführt.

### Beispiele

Polyacetal-Komponenten:

### A1 : ( POM MFI 9)

Polyoxymethylen-Copolymerisat aus Trioxan und ca. 2 Gew.-% Ethylenoxid.
Schmelzindex MFR 190/2,16 (ISO 1133): 9 g/10 min
Modifizierung : Keine

### A2 : (POM MFI 9 + 10% TPE-U)

Polyoxymethylen-Copolymerisat aus Trioxan und ca. 2 Gew.-% Ethylenoxid.
Schmelzindex MFR 190/2,16 (ISO 1133): 9 g/10 min
Modifizierung : 10 Gew.-% teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol, Shore-Härte A 80.

### A3 : ( POM MFI 9 + 20% TPE-U)

Polyoxymethylen-Copolymerisat aus Trioxan und ca. 2 Gew.-% Ethylenoxid,
Schmelzindex MFR 190/2,16 (ISO 1133): 9 g/10 min
Modifizierung : 20 Gew.-% teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol, Shore-Härte A 80.

### A4 : (POM MFI 9 + 13% MBS)

Polyoxymethylen-Copolymerisat aus Trioxan und ca. 2 Gew.-% Ethylenoxid.
Schmelzindex MFR 190/2,16 (ISO 1133): 9 g/10 min
Modifizierung: 13 Gew.-% MBS core shell-Modifikator aus ca. 80 Gew.-% elastischem Polybutadien-Kern und 20 Gew.-% MMA/Styrol-Schale mit einer Partikelgröße von etwa 100 nm.

### A5 : (POM MFI 9 + 25% MBS)

Polyoxymethylen-Copolymerisat aus Trioxan und ca. 2 Gew.-% Ethylenoxid.
Schmelzindex MFR 190/2,16 (ISO 1133): 9 g/10 min
Modifizierung: 25 Gew.-% MBS core shell-Modifikator aus ca. 80 Gew.-% elastischem Polybutadien-Kern und 20 Gew.-% MMA/Styrol-Schale mit einer Partikelgröße von etwa 100 nm.

### A6 : (®Delrin 500 P, DuPont, Genf, Schweiz)

Polyoxymethylen-Homopolymerisat aus Formaldehyd
Schmelzindex MFR 190/2,16 (ISO 1133): 14 g/10 min
handelsübliche Stabilisierung und Entformungsmittel

### A7 : (®Ultraform N 2320, BASF AG, Ludwigshafen, Bundesrepublik Deutschland)

Polyoxymethylen-Copolymerisat aus Trioxan und ca. 2,7 Gew.-% Butandiolformal,
Schmelzindex MFR 190/2,16 (ISO 1133): 9 g/10 min
handelsübliche Stabilisierung und Entformungsmittel

### Elastomer-Komponenten:

### B0 :

teilaromatisches Polyester-TPE-U aus Diphenylmethan-4,4'-diisocyanat (MDI), 1,4-Butandiol als Kettenverlängerer, Polyesterdiol aus Adipinsäure und 1,4-Butandiol, Shore-Härte A 83, Dichte 1,20 g/cm³, MVR 210/2,16 (ISO 1133): 6 cm³/10 min. Ohne Entformungshilfsmittel.

### B1 : TPE-S + olefinisches Thermoplastmaterial

Thermolast K Type TC 6 AAA; Shore Härte A 58, Dichte 1,19 g/cm³;
Compound aus hochmolekularem Styrol-Ethylen-Butylen-Styrol- (SEBS) - Blockcopolymer, Weichmacheröl, Polypropylen, anorganischem Füllstoff und Stabilisierung.

### B2 : TPE-S + nicht-olefinisches Thermoplastmaterial

Thermolast K STC 7480/44; Shore Härte A 75, Dichte 1,05 g/cm³;
Compound aus hochmolekularem, funktionalisiertem und nicht-funktionalisiertem SEBS-Blockcopolymer, Weichmacheröl, nicht-olefinischem Thermoplast (Anteil 40 Gew.-%), anorganischem Füllstoff und Stabilisierung, wobei auf 100 Gewichtsteile SEBS-Blockcopolymer 80 Gewichtsteile nicht-olefinischer Thermoplast und mindestens jeweils 5 Gewichtsteile Weichmacheröl und Füllstoff kommen.

### B3: TPE-S + nicht-olefinisches Thermoplastmaterial

Thermolast K STC 7849/42; Shore Härte A 75, Dichte 1,15 g/cm³;
Compound aus hochmolekularem, funktionalisiertem und nicht-funktionalisiertem SEBS-Blockcopolymer, Weichmacheröl, nicht-olefinischem Thermoplast (Anteil 44 Gew.-%), anorganischem Füllstoff und Stabilisierung, wobei auf 100 Gewichtsteile SEBS-Blockcopolymer 180 Gewichtsteile nicht-olefinischer Thermoplast und mindestens jeweils 5 Gewichtsteile Weichmacheröl und Füllstoff kommen.

### B4 : TPE-S + nicht-olefinisches Thermoplastmaterial

Thermolast K STC 7849/43; Shore Härte A 45, Dichte 1,06 g/cm³;
Compound aus hochmolekularem, funktionalisiertem und nicht-funktionalisiertem SEBS-Blockcopolymer, Weichmacheröl, nicht-olefinischem Thermoplast (Anteil 25 Gew.-%), anorganischem Füllstoff und Stabilisierung, wobei auf 100 Gewichtsteile SEBS-Blockcopolymer 80 Gewichtsteile nicht-olefinischer Thermoplast und mindestens jeweils 5 Gewichtsteile Weichmacheröl und Füllstoff kommen.

### B5 : TPE-S + nicht-olefinisches Thermoplastmaterial

THERMOLAST K HTF 8075/16; Shore Härte A 48, Dichte 1,07 g/cm³;
Compound aus hochmolekularem, funktionalisiertem und nicht-funktionalisiertem SEBS-Blockcopolymer (insgesamt 100 pphr), Weichmacheröl (5-200 pphr), nicht olefinischem Thermoplast (70 pphr), anorganischem Füllstoff (5-200 pphr) und FDAund BGVV-konformer Stabilisierung.

### B6 : TPE-S + nicht-olefinisches Thermoplastmaterial

THERMOLAST K HTF 7849/99; Shore Härte A 70, Dichte 1,01 g/cm³
Compound aus hochmolekularem, funktionalisiertem und nicht-funktionalisiertem SEBS-Blockcopolymer (insgesamt 100 pphr), Weichmacheröl (5-200 pphr), nicht-olefinischem Thermoplast (180 pphr) und FDA- und BGW-konformer Stabilisierung.

Bei den oben aufgeführten Thermolast K Typen (B1-B6) handelt es sich um Handelsprodukte der Firma Gummiwerke Kraiburg GmbH & Co. (Waldkraiburg, Bundesrepublik Deutschland)

### Tabellen

Tabelle 1 zeigt die Ergebnisse der Einlegespritzgießversuche auf verschiedene Polyacetaltypen (A1-A7) mit den erfindungsgemäßen Styrol-Olefin-Elastomer-Compounds (B2-B4) im Vergleich zu einem Styrol-Olefin-Elastomeren, das mit olefinischem Thermoplastmaterial modifiziert wurde (B1) und keine Haftung zeigt, sowie im Vergleich zu einem TPE-U (B0). Man erkennt, daß die Modifizierung des Polyacetals geringen Einfluß auf die Haftergebnisse hat. Das Homopolymer weist allerdings tendenziell schlechtere Verbundfestigkeiten auf. Das TPE-U zeigte bei der Verarbeitung die bekannten Nachteile, insbesondere Entformungsschwierigkeiten.

Tabelle 2 zeigt in einer weiteren Versuchsreihe (mit nur jeweils 5 Zugstäben) den Einfluß der Verarbeitungsparameter. Die Verarbeitungsparameter hatten bei dem verwendeten erfindungsgemäß modifizierten Styrol-Olefin-Elastomer (B4) nur wenig Einfluß auf die Haftung. Die Verbundfestigkeiten (und die dazugehörigen Bruchdehnungen) tendieren zu etwas höheren Werten bei höherer Einlegetemperatur und geringerer Einspritzgeschwindigkeit. Die Massetemperatur führte bei der verwendeten Maschinenkonfiguration (Verweilzeit bedingt durch den Schneckendurchmesser) zu einem Optimum bei ca. 250°C. Die Werkzeugtemperatur liegt in Bezug auf POM und das mit nicht-olefinischem Thermoplastmaterial modifizierte Styrol-Olefin-Elastomer optimal bei ca. 60-80°C.

Tabelle 3 zeigt ergänzend zu Tabelle 1 die Ergebnisse der Versuche mit den Polyacetaltypen A1 und A3 und den erfindungsgemäßen FDA/BGVV-konformen Styrol-Olefin-Elastomer-Compounds B5 und B6.

**Tabelle 1 :**

| Ergebnisse mit neuen modifizierten SEBS Compounds im Vergleich zu konventionellem SEBS Compound und zu TPE-U | | | | | | |
|---|---|---|---|---|---|---|
| Komponente a) | Komponente b) | BO | B1 Thermolast K TC 6AAA | B2 Thermolast K STC 7480/44 | B3 Thermolast K STC 7849/42 | B4 Thermolast K STC 7849/43 |
| | Tm [°C], Tw [°C] pa [bar] / tpa [s] ve* [%] | shore A 83 200, 80 80/30 100 | shore A 58 240, 60 50/15 75 | shore A 75 240, 60 50/15 75 | shore A 75 240, 60 50/15 75 | shore A 45 240, 60 40/15 75 |
| | T einleg [°C] | 155 | 155 | 155 | 155 | 155 |
| A1 | Verbundfestigkeit [N/mm²] ± Std. Abw. | 2,9 ± 0,1 | keine | 1,6 ± 0,3 | 1,6 ± 0,1 | 1,0 ± 0,0 |
| | Bruchdehnung [%] ± Std. Abw. | 8,6 ± 0,5 | Haftung | 5,3 ± 1,0 | 5,7 ± 0,5 | 18,5 ±0,7 |
| A2 | Verbundfestigkeit [N/mm²] ± Std. Abw. | 3,5 ± 0,2 | keine | 1,1 ± 0,2 | 1,4 ± 0,1 | 1,0 ± 0,0 |
| | Bruchdehnung [%] ± Std. Abw. | 30,7 ± 2,9 | Haftung | 6,0 ± 2,3 | 8,3 ± 2,7 | 19,2 ± 1,5 |
| A3 | Verbundfestigkeit [N/mm²] ± Std. Abw. | 4,2 ± 0,4 | keine | 1,6 ± 0,2 | 1,6 ± 0,1 | 1,0 ± 0,0 |
| | Bruchdehnung [%] ± Std. Abw. | 36,7 ± 9,8 | Haftung | 7,2 ± 1,3 | 5,8 ± 0,5 | 19,2 ± 1,3 |
| A4 | Verbundfestigkeit [N/mm²] ±Std.Abw. | 3,0 ± 0,3 | keine | 1,3 ± 0,1 | 1,3 ± 0,3 | 1,0 ± 0,0 |
| | Bruchdehnung [%] ± Std. Abw | 16,4 ± 3,3 | Haftung | 5,1 ± 0,5 | 6,1 ± 1,6 | 19,5 ± 2,1 |
| A5 | Verbundfestigkeit [N/mm²] ± Std. Abw. | 3,2 ± 0,4 | keine | 1,6 ± 0,2 | 1,7 ± 0,1 | 1,0 ± 0,0 |
| | Bruchdehnung [%] ± Std. Abw. | 23,7 ± 7,6 | Haftung | 7,3 ± 1,2 | 9,2 ± 1,4 | 20,7 ± 0,9 |
| A6 | Verbundfestigkeit [N/mm²] ± Std. Abw. | 2,0 ± 0,1 | keine | keine | 0,5 ± 0,2 | 1,0 ± 0,0 |
| | Bruchdehnung [%] ± Std. Abw. | 4,7 ± 0,4 | Haftung | Haftung | 1,6 ± 0,7 | 19,5 ± 2,1 |
| A7 | Verbundfestigkeit [N/mm²] ± Std. Abw. | 2,8 ± 0,2 | keine | 1,6 ± 0,4 | 1,7 ± 0,1 | 1,0 ± 0,0 |
| | Bruchdehnung [%] ± Std. Abw. | 7,9 ± 0,8 | Haftung | 5,1 ± 1,5 | 6,4 ± 0,3 | 18,9 ± 1,4 |

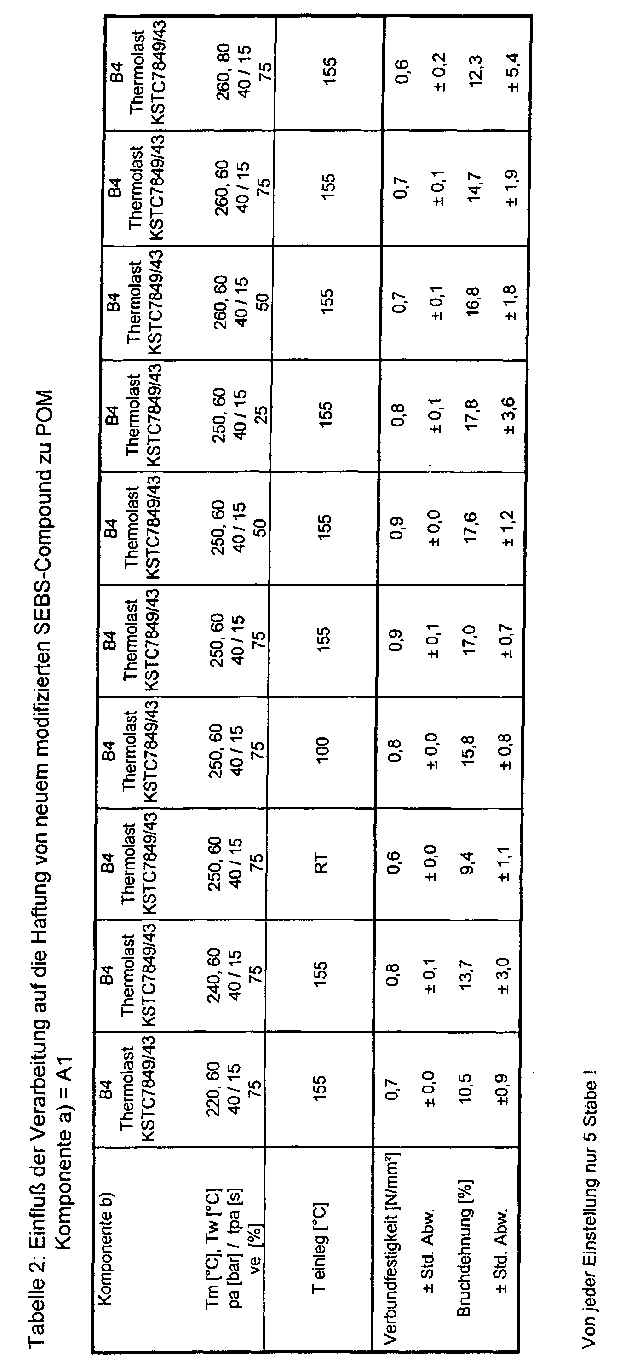

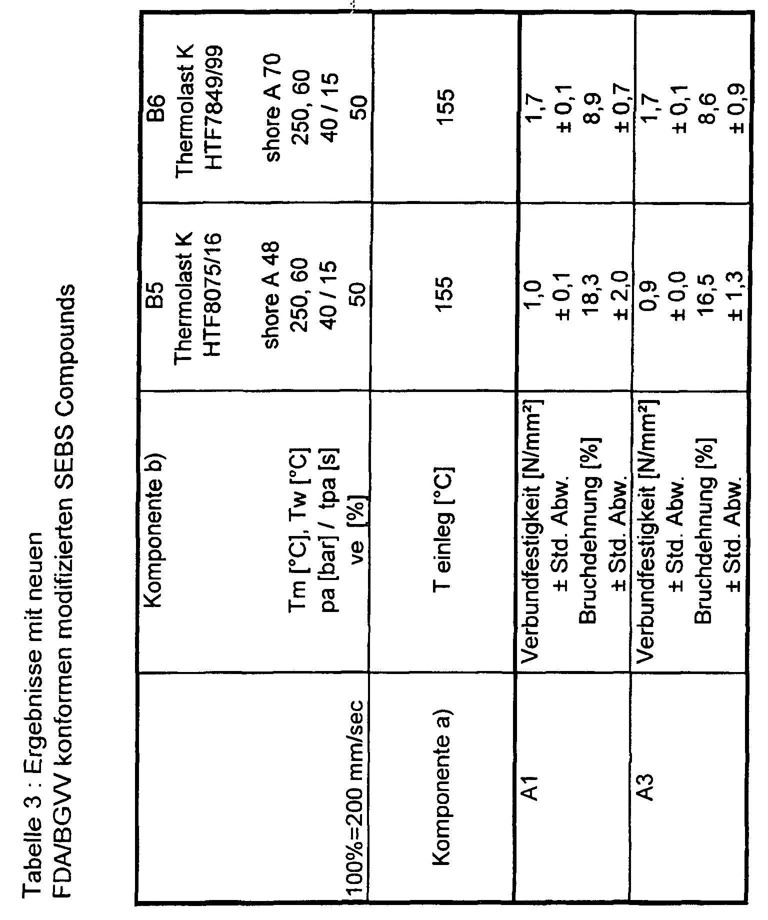

## Patentansprüche

1. Verbundkörper aus Polyacetal und mindestens einem modifizierten Styrol-Olefin-Elastomeren, gebildet durch ein Polyacetal-Formteil, das teilweise oder vollständig mit dem modifizierten Styrol-Olefin-Elastomeren beschichtet ist oder an das ein oder mehrere Formteile aus dem modifizierten Styrol-Olefin-Elastomeren direkt angeformt sind, wobei das modifizierte Styrol-Olefin-Elastomer ein Compound ist, das 20 bis 85 Gew.-% funktionalisiertes und/oder nicht-funktionalisiertes hochmolekulares Styrol-Olefin-Blockcopolymer, aufgebaut aus steifen Styrol-Endblöcken und flexiblen Olefin-Mittelblöcken, und 15 bis 70 Gew.-% nicht-olefinisches Thermoplastmaterial enthält.

2. Verbundkörper nach Anspruch 1, **dadurch gekennzeichnet, daß** das Polyacetal und das modifizierte Styrol-Olefin-Elastomer adhesiv miteinander verbunden sind.

3. Verbundkörper nach Anspruch 1 oder 2, **dadurch gekennzeichnet, daß** die Verbundfestigkeit zwischen dem Polyacetal und dem modifizierten Styrol-Olefin-Elastomeren mindestens 0,5 N/mm² beträgt.

4. Verbundkörper nach einem der Ansprüche 1 bis 3, **dadurch gekennzeichnet, daß** als Polyacetal ein Polyoxymethylen-Copolymer verwendet wird.

5. Verbundkörper nach einem der Ansprüche 1 bis 4, **dadurch gekennzeichnet, daß** das nicht-olefinische Thermoplastmaterial ausgewählt ist aus thermoplastischen Polyesterurethan-Elastomeren, thermoplastischen Polyetherurethan-Elastomeren, thermoplastischen Polyestern, thermoplastischen Polyesteresterelastomeren, thermoplastischen Poyetherester-Elastomeren, thermoplastischen Polyetheramid-Elastomeren, Polyetherurethan-Elastomeren, thermoplastischen Polyestern, thermoplastischen Polyesteresterelastomeren, thermoplastischen Poyetherester-Elastomeren, thermoplastischen Polyetheramid-Elastomeren, thermoplastischen Polyamiden, thermoplastischen Polycarbonaten, thermoplastischen Polyacrylaten, Acrylat-Kautschuken und Styrolacrylnitril/Acrylatkautschuken (ASA).

6. Verbundkörper nach einem der Ansprüche 1 bis 5, in Form eines Formteils aus Polyacetal, welches ganz oder teilweise mit dem modifizierten Styrol-Olefin-Elastomeren beschichtet ist.

7. Verbundkörper nach einem der Ansprüche 1 bis 6, in Form eines Formteils aus Polyacetal, an welches mindestens ein weiteres Formteil aus dem modifizierten Styrol-Olefin-Elastomeren angeformt ist.

8. Verbundkörper nach einem der Ansprüche 1 bis 7, **dadurch gekennzeichnet, daß** dieser im Mehrkomponentenspritzgußverfahren hergestellt wurde.

9. Verbundkörper nach Anspruch 8, **dadurch gekennzeichnet, daß** erst ein Formteil aus Polyacetal geformt wird und danach eine Beschichtung oder ein Formteil aus dem modifizierten Styrol-Olefin-Elastomer auf das Polyacetal-Formteil gespritzt wird.

10. Verfahren zur Herstellung eines Verbundkörpers aus Polyacetal und mindestens einem modifizierten Styrol-Olefin-Elastomeren, wobei das modifizierte Styrol-Olefin-Elastomer 15 bis 70 Gew.-% nicht-olefinisches Thermoplastmaterial enthält und wobei erst ein Formteil aus Polyacetal geformt wird, an das anschließend eine Beschichtung oder mindestens ein Formteil aus dem modifizierten Styrol-Olefin-Elastomeren angespritzt wird, und somit das Polyacetal adhesiv mit dem modifizierten Styrol-Olefin-Elastomeren verbunden wird.

11. Verfahren nach Anspruch 10, **dadurch gekennzeichnet, daß** es im Mehrkomponentenspritzgußverfahren in einem Werkzeug durchgeführt wird, wobei das Formteil aus Polyacetal vor dem Anspritzen des modifizierten Styrol-Olefin-Elastomeren auf eine Temperatur im Bereich von 80°C bis knapp unter seinen Schmelzpunkt vorgewärmt ist, das modifizierte Styrol-Olefin-Elastomer beim Anspritzen an das Formteil aus Polyacetal eine Massetemperatur von 200 bis 270°C aufweist und das Werkzeug auf eine Temperatur im Bereich von 20 bis 140°C temperiert ist.

12. Verfahren nach Anspruch 11, **dadurch gekennzeichnet, daß** das Formteil aus Polyacetal auf eine Temperatur im Bereich von 100°C bis 160°C vorgewärmt ist, das modifizierte Styrol-Olefin-Elastomer eine Massetemperatur von 220 bis 260°C aufweist und das Werkzeug auf eine Temperatur im Bereich von 30 bis 80°C temperiert ist.
